(19) Europäisches Patentamt
European Patent Office
Office européen des brevets

(11) Veröffentlichungsnummer: **0 301 351 A2**

(12) **EUROPÄISCHE PATENTANMELDUNG**

(21) Anmeldenummer: **88111518.2**

(22) Anmeldetag: **18.07.88**

(51) Int. Cl.4: **C07F 9/38 , C02F 5/14 , A61K 31/66**

(30) Priorität: **25.07.87 DE 3724654**

(43) Veröffentlichungstag der Anmeldung: **01.02.89 Patentblatt 89/05**

(84) Benannte Vertragsstaaten: **AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Blum, Helmut**
**Bertha-von-Suttner-Strasse 30**
**D-4000 Düsseldorf 13(DE)**
Erfinder: **Hemmann, Siglinde**
**Kantstrasse 28**
**D-4005 Meerbusch 1(DE)**

(54) **Hydroxyacetonitrildiphosphonsäure, Verfahren zu ihrer Herstellung und ihre Verwendung.**

(57) Die Erfindung betrifft Hydroxyacetonitrildiphosphonsäure und ihre Salze der allgemeinen Formel (III)

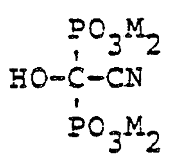

(III)

in der M für H oder ein Kation einer Base steht, ein Verfahren zu ihrer Herstellung, das dadurch gekennzeichnet ist, daß man 3-$R^1$-3-Oxo-1-aminopropan-1,1-diphosphonsäuren der allgemeinen Formel (IV)

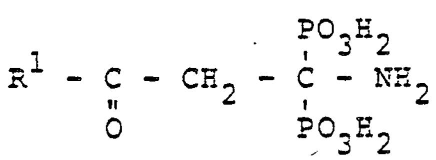

(IV)

in der $R^1$ für eine tertiäre substituierte Alkylgruppe, eine gegebenenfalls substituierte Cycloalkylgruppe oder einen gegebenenfalls substituierten Aryl- oder Heteroarylrest steht, mit Salpetriger Säure umsetzt, aus der Reaktionsmischung das Nebenprodukt $R^1$-COOH und nicht umgesetztes Ausgangsmaterial in an sich bekannter Weise abtrennt, und durch Zugabe einer Base die Hydroxyacetonitrildiphosphonsäure in Form eines Salzes erhält; die Verwendung der obigen Verbindungen als Komplexiermittel und als Thresholder.

EP 0 301 351 A2

## Hydroxyacetonitrildiphosphonsäure, Verfahren zu ihrer Herstellung und ihre Verwendung

Die Erfindung betrifft Hydroxyacetonitrildiphosphonsäure und ihre Salze, Verfahren zu ihrer Herstellung und ihre Verwendung als Thresholder oder als Komplexierungsmittel.

1-Amino-1,1-diphosphonsäuren der nachfolgenden allgemeinen Formel (I)

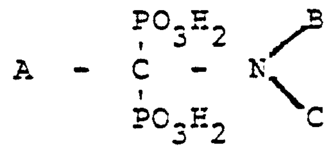

(I)

in der A, B und C für aliphatische, cycloaliphatische oder aromatische Kohlenwasserstoffreste stehen und B und C zusätzlich auch für ein H-Atom stehen können, sind aus dem Stand der Technik bekannt. Sie werden durch Umsetzung von Nitrilen mit Phosphortrihalogeniden und anschließende Hydrolyse bzw. Alkoholyse (DE-AS 10 02 355), Umsetzung von Nitrilen mit Phosphoriger Säure (DE-OS 26 25 767) oder Umsetzung von Carbonsäureamiden mit Phosphortrihalogeniden bei Zusatz von Phosphoriger Säure und anschließende Hydrolyse (DE-OS 19 58 123) hergestellt. Phosphonsäuren der oben genannten allgemeinen Formel (I) besitzen die Fähigkeit, Schwermetallionen und Erdalkalimetallionen zu komplexieren. Sie werden daher verbreitet als Komplexbildner bzw. Chelatbildner in der Wasserenthärtung, der Waschmittelherstellung, auf dem Textilsektor bzw. in der Papierherstellung verwendet.

Aus der DE-OS 16 17 729 ist es bekannt, 1-Hydroxyethan-1,1-diphosphonsäure als Komplexierungsmittel zur Verhinderung von Zahnsteinbildung zu verwenden.

Das US-P 2 026 078 beschreibt die Synthese von Ethylen-1,1-diphosphonsäure und ihre Verwendung als Komplexierungsmittel für Schwermetallionen.

Als Komplexbildner bekannt sind ferner strukturverwandte Verbindungen der allgemeinen Formel (II):

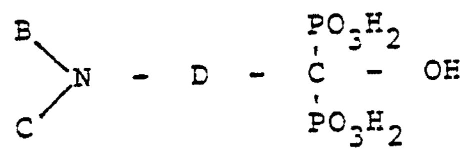

(II)

In (II) stehen B und C für Wasserstoff oder aliphatische oder aromatische Reste in Analogie zur oben genannten allgemeinen Formel (I), während D für einen Alkylenrest mit 1 bis 5 C-Atomen steht. In der DE-OS 34 34 667 und der DE-PS 25 34 391 wird die Verwendung von Verbindungen der allgemeinen Formel (II) sowie deren wasserlöslicher Salze als Komplexbildner für Erdalkali-Ionen, vorzugsweise Calcium-Ionen, und als Thresholder beschrieben. Die DE-PS 24 05 254 beschreibt die Verwendung obiger Verbindungen in der Prophylaxe and Therapie von Störungen des Calcium- oder Phosphatstoffwechsels im menschlichen und tierischen Körper.

Es wurde nun überraschend gefunden, daß durch Umsetzen von 3-R[1]-3-Oxo-1-aminopropan-1,1-diphosphonsäuren mit Salpetriger Säure eine neue Verbindung sowie deren Salze erhältlich sind, diese Verbindungen gute komplexierende Eigenschaften aufweisen und daher in geeigneten Zusammensetzungen als Thresholder beispielsweise zur Hemmung von Calcit-Scaling verwendet werden können.

Die erfindungsgemäßen Verbindungen können weiterhin besonders wirksame Zahnsteininhibitoren und in der Lage sein, einerseits die Bildung von Zahnstein zu inhibieren, und andererseits den Zahnschmelz in hohem Maße zu stabilisieren und auf diese Weise den Angriff von Polyzuckern auf Hydroxylapatit als Grundsubstanz des Zahns zu erschweren.

Die Erfindung betrifft Hydroxyacetonitrildiphosphonsäure und ihre Salze der allgemeinen Formel (III)

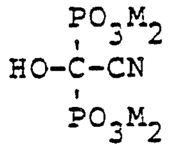

(III)

in der M für H oder das Kation einer Base steht.

Die Erfindung betrifft außerdem ein Verfahren zur Herstellung der Verbindungen der allgemeinen Formel (III) in der M für H oder das Kation einer Base steht, das dadurch gekennzeichnet ist, daß man eine 3-$R^1$-3-Oxo-1-aminopropan-1,1-diphosphonsäure der allgemeinen Formel (IV)

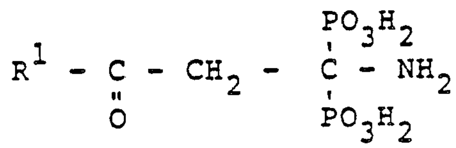

(IV)

in der $R^1$ für
-eine tertiäre Alkylgruppe der allgemeinen Formel
-($R^2$)C($R^3$) ($R^4$), wobei $R^2$ und $R^3$ unabhängig voneinander eine $C_1$ - $C_3$-Alkyl- und $R^4$ eine $C_1$ - $C_{10}$-Alkylgruppe darstellen,
-eine gegebenenfalls substituierte Cycloalkylgruppe oder
-eine Aryl- oder Heteroarylgruppe, die gegebenenfalls mit Halogen, $C_1$ - $C_5$-Alkoxy, Di-$C_1$-$C_5$-alkylamino oder $C_1$ - $C_5$-Alkyl substituiert ist, steht, mit Salpetriger Säure, die vorzugsweise in situ aus wäßriger Alkalinitritlösung und verdünnter Mineralsäure hergestellt worden ist, wobei das Molverhältnis Alkalinitrit zu Ausgangsstoff im Bereich von 1 zu 1 bis 6 zu 1 liegt, bei Temperaturen von Raumtemperatur bis 75 °C umsetzt und die Reaktionsmischung in an sich bekannter Weise aufarbeitet. Hieraus kann dann mittels eines sauren Reaktionspartners in an sich bekannter Weise bei einer vorsichtigen Aufarbeitung das Reaktionsprodukt der allgemeinen Formel (II), in dem M für H steht, isoliert werden. Gegebenenfalls wird anschließend das Reaktionsprodukt der allgemeinen Formel (III), in der M für H steht, in an sich bekannter Weise durch Zugabe basischer Reaktionspartner der Formel $M^+OH^-$, worin $M^+$ für ein Alkalimetall- oder Ammoniumkation $R^5R^6R^7R^8N^+$ steht, in dem $R^5$, $R^6$, $R^7$ und $R^8$ unabhängig voneinander Wasserstoff oder ein verzweigter oder unverzweigter Alkylrest mit 1 bis 12 C-Atomen sein können, in Verbindungen der Formel (III), überführt, in der M für ein Alkalimetall- oder Ammoniumkation der genannten Bedeutung steht. Die erhaltenen Verbindungen der Formel (III) werden nach an sich bekannten Methoden isoliert und gereinigt.

Die Erfindung betrifft außerdem die Verwendung der Verbindungen der allgemeinen Formel (III) als Komplexiermittel und als Thresholder.

Die erfindungsgemäßen neuen Verbindungen der oben angegebenen allgemeinen Formel (III) lassen sich - je nach Substituent M - als Hydroxyacetonitrildiphosphonsäure bzw. deren Salze bezeichnen.

Komplexierend wirksam und damit ein bevorzugter Gegenstand der Erfindung sind Verbindungen der oben angegebenen allgemeinen Formel (III), in der M statt des Protons für die freie Säure auch für ein Kation einer wasserlöslichen Base, insbesondere für Alkalimetall-Kationen oder ein Ammoniumkation der allgemeinen Formel $R^5R^6R^7R^8N^+$ stehen kann. Ein wesentlicher Vorteil dieser von der freien Säure abgeleiteten Salze ist es, daß sie die Wasserlöslichkeit der Verbindung der allgemeinen Formel (III), in der M für H steht, deutlich verbessern. Damit wird natürlich die Verwendbarkeit derartiger Verbindungen in Mitteln, die einen Threshold-Effekt ausüben, ebenfalls verbessert. Als Alkalimetall-Kationen kommen erfindungsgemäß insbesondere Kationen wie $Na^+$ oder $K^+$ in Frage. M kann jedoch auch für Ammoniumkationen der obigen allgemeinen Struktur stehen, in der $R^5$, $R^6$, $R^7$ und $R^8$ unabhängig voneinander Wasserstoff oder verzweigte oder unverzweigte Alkylreste mit 1 bis 12 C-Atomen sein können. Als Alkylreste kommen damit alle verzweigten und unverzweigten Reste aus der Gruppe Methyl, Ethyl, Pro pyl, Butyl, Pentyl, Hexyl, Heptyl, Octyl, Nonyl, Decyl, Undecyl und Dodecyl in Frage.

Als wasserlösliche Salze werden erfindungsgemäß Alkalimetallsalze der allgemeinen Formel (III) bevorzugt, in der M für ein Alkalimetall-Kation steht. Besonders bevorzugt sind die Natriumsalze.

Weiterhin betrifft die Erfindung ein Verfahren zur Herstellung von Verbindungen der Formel (III) durch Umsetzen von 3-$R^1$-3-Oxo-1-aminopropan-1,1-diphosphonsäuren mit Salpetriger Säure. Einerseits ist es für

den Fachmann durchaus plausibel, daß ein durch -ständige Phosphonsäuregruppen stabilisiertes, primäres aliphatisches Amin, ähnlich einem primären aromatischen Amin, bei der Umsetzung mit verdünnter Salpetriger Säure, zumal bei erhöhter Temperatur, nicht auf der Diazoniumsalzstufe stehen bleibt, sondern sofort bis zur Hydroxyverbindung "verkocht" wird. Dies konnte im übrigen auch von K.-H. Worms und H. Blum, Z. anorg. allg. Chem. (1979) 457, 214 für die entsprechenden 1-Aminoalkan-1,1-diphosphonsäuren nachgewiesen werden. Allerdings ist es durchaus überraschend, daß es darüber hinaus zu einer möglicherweise oxidativen Spaltung zwischen der Ketogruppe und der Methylengruppe im Ausgangsmolekül kommt, und hierbei neben dem Nebenprodukt $R^1$-COOH die erfindungsgemäßen Verbindungen isoliert werden können, die eine Cyanogruppe im Molekül besitzen.

Dieses Verfahren muß deshalb als chemisch eigenartig angesehen werden, da die Bildung einer Cyanogruppe unter diesen Reaktionsbedingungen nicht vorhersehbar war. Es geschieht erfindungsgemäß durch Umsetzung von 3-$R^1$-3-Oxo-1-aminopropan-1,1-diphosphonsäure der allgemeinen Formel (IV)

$$R^1 - \underset{\underset{O}{\parallel}}{C} - CH_2 - \overset{\overset{PO_3H_2}{|}}{\underset{\underset{PO_3H_2}{|}}{C}} - NH_2 \qquad (IV)$$

in der $R1^1$ für

-eine tertiäre Alkylgruppe der allgemeinen Formel

-($R^2$)C($R^3$) ($R^4$),

wobei $R^2$ und $R^3$ unabhängig voneinander eine $C_1$ - $C_3$-Alkyl- und $R^4$ eine $C_1$ - $C_{10}$-Alkylgruppe darstellen,

-eine gegebenenfalls substituierte Cycloalkylgruppe oder

-eine Aryl- oder Heteroarylgruppe, die gegebenenfalls mit Halogen, $C_1$ bis $C_5$-Alkoxy, Di-$C_1$-$C_5$-alkylamino oder $C_1$-$C_5$-Alkyl substituiert ist, steht, mit Salpetriger Säure, die vorzugsweise in situ aus wäßriger Alkalinitritlösung und verdünnter Mineralsäure hergestellt worden ist, wobei das Molverhältnis Alkalinitrit zu Ausgangsstoff im Bereich von 1 zu 1 bis 6 zu 1 liegt, bei Temperaturen von Raumtemperatur bis 75 °C umsetzt und die Reaktionsmischung in an sich bekannter Weise aufarbeitet.

$R^1$ kann einmal für eine tertiäre Alkylgruppe der allgemeinen Formel -($R^2$)C($R^3$) ($R^4$) stehen, wobei $R^2$ und $R^3$ unabhängig voneinander eine $C_1$ - $C_3$-Alkyl- und $R^4$ eine $C_1$ - $C_{10}$-Alkylgruppe darstellen. $R^2$ und $R^3$ können unabhängig voneinander Methyl, Ethyl oder Propyl sein. Bevorzugt ist Methyl oder Ethyl. $R^4$ kann für eine lineare oder verzweigte $C_1$ - $C_{10}$-Alkylgruppe wie Methyl, Ethyl, Propyl, Butyl, Pentyl, Hexyl, Heptyl, Octyl, Nonyl oder Decyl sowie deren verzweigte Isomere stehen.

$R^1$ kann weiterhin für eine gegebenenfalls substituierte $C_3$-$C_6$-Cycloalkylgruppe stehen. Geeignet sind Cyclopropyl, Cyclobutyl, Cyclopentyl, Cyclohexyl, 1-Methylcyclopropyl, 1-Methylcyclobutyl, 1-Methylcyclopentyl und 1-Methylcyclohexyl.

$R^1$ kann schließlich für eine Aryl- oder Heteroarylgruppe, die gegebenenfalls mit Halogen, $C_1$ - $C_5$-Alkoxy, Di-$C_1$ - $C_5$-alkylamino oder $C_1$ - $C_5$-Alkyl substituiert ist, stehen. Eine geeignete Arylgruppe ist insbesondere Phenyl. Geeignete Heteroarylgruppen sind solche, die 5 oder 6 Glieder aufweisen und vorzugsweise O-, S- oder N-Atome besitzen. Sie können anelliert oder kondensiert sein. Weitere, gegebenenfalls substituierte Aryl- oder Heteroarylgruppen sind 2-Methylphenyl, 3-Methylphenyl, 4-Methylphenyl, 2,4-Dimethylphenyl, 2-Fluorphenyl, 3-Fluorphenyl, 4-Fluorphenyl, 2-Chlorphenyl, 3-Chlorphenyl, 4-Chlorphenyl, 2,4-Dichlorphenyl, 3,4-Dichlorphenyl, 3,5-Dichlorphenyl, 2-Methoxyphenyl, 3-Methoxyphenyl, 4-Methoxyphenyl, 3,4-Dimethoxyphenyl, 3,4,5-Trimethoxyphenyl, 2-Furyl, 3-Furyl, 5-Brom-2-methyl-3-furyl, 2-Thienyl, 3-Thienyl und 5-Methyl-2-thienyl.

Mit Vorteil wird $NaNO_2$ als Alkalinitrit für das erfindungsgemäße Verfahren verwendet. Die Herstellung der als Ausgangsstoffe verwendeten 3-$R^1$-3-Oxo-1- aminopropan-1,1-diphosphonsäuren der allgemeinen Formel (IV) ist in der DE-OS 36 11 522 beschrieben, soweit $R^1$ für eine tertiäre Alkylgruppe steht. Als Ausgangsmaterialien für Verbindungen der allgemeinen Formel (IV), in denen $R^1$ für eine gegebenenfalls substituierte Cyclopropylgruppe oder eine gegebenenfalls substituierte Arylgruppe oder Heteroarylgruppe steht, können die 3 $R^1$-3-Oxo-propionsäurenitrile der EP-OS 0 089 011 eingesetzt werden, die nach dem Verfahren der DE-OS 36 11 522 zu Verbindungen der allgemeinen Formel (IV) umgesetzt werden können.

Die Reaktionstemperaturen bewegen sich vorzugsweise im Bereich von 40 bis 60 °C, besonders bevorzugt bei 45 bis 55 °C. Bei der Durchführung wird im allgemeinen die Verbindung der allgemeinen Formel (IV) suspendiert in verdünnter Mineralsäure, vorzugsweise Salzsäure vorgelegt und anschließend die wäßrige Alkalinitritlösung zugegeben. Das Molverhältnis Alkalinitrit zu Ausgangsstoff liegt vorzugsweise im

Bereich von 3 zu 1 bis 5 zu 1. Die Vervollständigung der Umsetzung kann durch übliche chromatographische Methoden überprüft werden.

Anschließend wird aus der Reaktionsmischung das Nebenprodukt $R^1COOH$ und der Ausgangsstoff extraktiv entfernt, überschüssige Salpetrige Säure beispielsweise mit Hydrazin zerstört und die Verbindung der allgemeinen Formel (III) durch Zugabe einer Base als Salz erhalten. Hieraus kann dann mittels eines sauren Reaktionspartners in an sich bekannter Weise bei vorsichtiger Aufarbeitung das Reaktionsprodukt der allgemeinen Formel (II), in dem M für H steht, isoliert werden.

Geeignete saure Reaktionspartner sind Mineralsäuren, wie Salz-, Schwefel-, Salpeter- oder Phosphorsäure, organische Säuren sowie saure und stark saure Ionenaustauscherharze. Bevorzugt sind stark saure Ionenaustauscherharze.

Das erhaltene Reaktionsprodukt der allgemeinen Formel (III), in der M für H steht, wird dann gegebenenfalls durch Zugabe basischer Reaktionspartner der Formel $M^+OH^-$, worin $M^+$ für ein Alkalimetall- oder Ammoniumkation steht, in seine wasserlöslichen Salze, bevorzugt seine Alkalimetallsalze, besonders bevorzugt seine Natriumsalze, überführt und nach an sich bekannten Methoden aus der Reaktionsmischung isoliert und gereinigt. Dies kann beispielsweise dadurch geschehen, daß man das bei erhöhter Temperatur in der Reaktionsmischung gelöste Reaktionsprodukt durch Abkühlen auskristallisiert oder durch Zugabe eines Lösungsmittels ausfällt, den erhaltenen Niederschlag oder die Kristalle durch Abdekantieren der Mutterlauge oder durch Filtration von den gelösten Reaktionspartnern trennt und den Niederschlag bzw. die Kristalle anschließend trocknet und gegebenenfalls durch Umkristallisieren weiter reinigt.

Überraschenderweise wurde außerdem gefunden, daß die genannte Verbindung der allgemeinen Formel (III) sowie deren Salze ausgezeichnete komplexierende Eigenschaften gegenüber Erdalkali-Ionen, insbesondere Calcium-Ionen zeigen. Dies kann beispielsweise in einfacher Weise durch den "Hampshire-Test" nachgewiesen werden.

Außer dem ausgezeichneten Komplexiervermögen zeichnen sich die Verbindungen der allgemeinen Formel (III) sowie ihre Salze durch eine starke Threshold-Aktivität aus, d.h. sie sind in der Lage, die Ausfällung schwer löslicher Erdalkalimetallsalze insbesondere Erdalkalicarbonaten, -sulfaten, -phosphaten und -silicaten auch in Impfmengen, das sind unterstöchiometrische Mengen, zu verhindern.

Sie sind als Komplexiermittel sehr vielseitig verwendbar: Beispielsweise können sie speziell für die Vorgänge der Wasserenthärtung Anwendung finden, wobei die vorstehend erwähnte Threshold-Wirkung eine wesentliche Rolle spielt. Es ist daher nicht notwendig, mit stöchiometrischen Mengen zu arbeiten, sondern man kann auch mit unterstöchiometrischen Mengen Calcitfällungen erheblich verzögern.

Sie sind auch als Korrosions- und Steinansatzverhütungsmittel für Kühlwässer, insbesondere in Kombination mit an sich bekannten Zusätzen, gut geeignet. Sie kommen auch als Buildersubstanzen mit komplexierenden Eigenschaften in Wasch- und Reinigungsmitteln infrage und können in Kombination mit bekannten anionenaktiven, kationenaktiven und nicht ionogenen Netzmitteln verwendet werden.

Dazu werden eine oder mehrere Verbindungen der angegebene allgemeinen Formel (III), in der M die oben angegebene Bedeutung hat, bevorzugt in Mengen von 1 bis 50 mg/l in Zusammensetzungen eingesetzt, die als Thresholder gegen Calcitbildung Verwendung finden. Besonders gute Wirksamkeit zeigen dabei Zusammensetzungen, die eine oder mehrere Verbindungen der allgemeinen Formel (III) in Konzentrationen von 5 bis 50 mg/l enthalten und in denen M für ein Alkalimetallkation, bevorzugt ein Natriumion, steht.

Derartige Zusammensetzungen sind bestens geeignet, die Abscheidung von Calcit auch bei sehr hohen Scale-Bildungs-Konzentrationen zu verhindern. Sie benötigen dabei eine vergleichsweise niedrige Konzentration, die sie anderen strukturell vergleichbaren komplexierenden Zusammensetzungen deutlich überlegen macht.

Die erfindungsgemäßen Verbindungen der allgemeinen Formel (III) sind auch geeignet für pharmazeutische Zwecke, beispielsweise zur Behandlung von Störungen des Calcium- bzw. des Phosphatstoffwechsels und den damit verbundenen Erkrankungen. Weiterhin kann die Hydroxyacetonitrildiphosphonsäure und deren Salze in kosmetischen Zubereitungen in Zahn- und Mundpflegemitteln, wie beispielsweise Mundwässern, Mundpulvern, Zahncremes oder Zahnpasten, mouth washes sowie Zahnprothesehaftmitteln, zur Zahnsteintherapie und Zahnsteinprophylaxe verwendet werden. Aus der DE-OS 32 37 573 ist es bekannt, organische Triphosphonsäuren oder Tetraphosphonsäuren mit Technetium-99m zu markieren und diese dann zur szintigraphischen Darstellung RES-haltiger Organe und der Lymphgefäße zu verwenden. Auch Diphosphonsäureverbindungen wie die Technetium-99m-1,1-Diphosphonopropan-2,3-dicarbonsäure werden zur Skelettszintigraphie verwendet.

Schließlich kann die erfindungsgemäße Verbindung und ihre Salze als Zwischenprodukt für organische Synthesen verwendet werden.

Die Erfindung wird durch die nachfolgenden Beispiele näher erläutert.

Beispiel 1

0,20 mol (63,4 g) 4-Ethyl-4-methyl-3-oxo-1-aminohexan-1,1-diphosphonsäure (IV, $R^2$ = $R^3$ = $CH_2CH_3$, $R^4$ = $CH_3$) wurden in 600 ml 2n Salzsäure suspendiert und hierzu unter Rühren bei 50 °C innerhalb von sieben Stunden eine Lösung von 0,8 mol (55,2 g) in Natriumnitrit gelöst in 1104 ml Wasser zugetropft. Dabei bildete sich als organische Phase die 2-Ethyl-2-methylbuttersäure, die mit Ether extrahiert wurde. Nicht verbrauchte Salpetrige Säure wurde vor der weiteren Aufarbeitung mit Hydrazin entfernt. Die wäßrige Phase wurde im Rotavapor auf etwa 300 ml eingeengt und mit Natronlauge bis pH = 9 alkalisch gestellt. Das Tetranatriumsalz der Hydroxyacetonitrildiphosphonsäure (III, M = Na) kristallisierte aus der kalten Lösung in Form des Octahydrats aus. Die Ausbeute betrug 65 % (58,4 g).
Elementaranalyse in %:
berechnet:
P 13,8 C 5,35 H 3,79 N 3,21
Na 20,5 $H_2O$ 32,1
gefunden:
P 13,8 C 5,33 H 3,85 N 3,20
Na 19,9 $H_2O$ 32,2

Beispiel 2

Die Calciumkomplexierleistung wurde mit Hilfe des Hampshire-Tests ermittelt, indem die mit $Na_2CO_3$ versetzte Hydroxyacetonitrildiphosphonsäure bei pH = 11 mit einer 0,2 molaren Calciumchloridlösung bis zu einer bleibenden Trübung titriert wurde. Hydroxyacetonitrildiphosphonsäure wurde in Form ihres Tetranatriumsalzes eingesetzt und die erhaltenen Meßwerte auf die reine Diphosphonsäure umgerechnet.

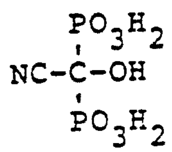

520 mg $CaCO_3$/g Säure

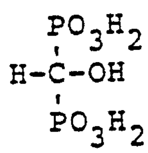

130 mg $CaCO_3$/g Säure

(als Vergleichssubstanz)

Beispiel 3

Die fällungsmodifizierenden Eigenschaften, d.h. die Fähigkeit eines Komplexbildners, in unterstöchiometrischen Mengen des Scaling schwerlöslicher Calciumsalze, wie beispielsweise von Calcit, zu verhindern bzw. zu verzögern, wurde im Impfbereich von 5 bis 50 ppm (Zugabemengen der Hydroxyacetonitrildiphosphonsäure) untersucht. Hydroxyacetonitrildiphosphonsäure wurde in Form ihres Tetranatriumsalzes eingesetzt und die erhaltenen Meßwerte auf die reine Diphosphonsäure umgerechnet.

Die Bestimmung erfolgte nach der Standard-Testmethode 03-74 der National Association of Corrosion Engineers (NACE).
Scale-Bildungskonz.: 4000 mg $CaCO_3$/l

| | 5 | 10 | 20 | 40 | 50 ppm |
|---|---|---|---|---|---|
| 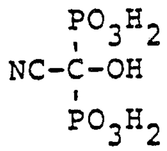 | 78 | 90 | 92 | 93 | 95 |
| 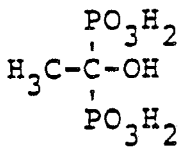 (als Vergleichssubstanz) | 70 | 74 | 80 | 83 | 85 |

Beispiel 4

Ein entscheidender Schritt bei der Bildung von Zahnstein ist die Umwandlung von Calciumhydrogenphosphat in Hydroxylapatit. Wie das Beispiel zeigt, läßt sich dieser Vorgang durch die erfindungsgemäße Hydroxyacetonitrildiphosphonsäure wirksam verhindern. Dazu wird der Inhibierungsgrad dieser Umwandlung gemessen, indem die in einer bei 60 °C übersättigten Calciumphosphatlösung freigesetzten Protonen gemäß der Gleichung

$$5\ CaHPO_4 + H_2O \rightarrow Ca_5(OH)(PO_4)_3 + 2\ H_3PO_4$$

bestimmt werden.

| | |
|---|---|
| Hydroxyacetonitrildiphosphonsäure | 91 % Inhibierung |
| Hydroxymethandiphosphonsäure (als Vergleichssubstanz) | 81 % Inhibierung |

Beispiel 5

Die erfindungsgemäße Hydroxyacetonitrildiphosphonsäure setzt wirksam die Löslichkeit von Apatit herab, indem sie auf der Zahnsteinoberfläche sorbiert. Zur Bestimmung dieser Eigenschaft wird die Löslichkeit von synthetischem Apatit nach der Behandlung mit der Hydroxyacetonitrildiphosphonsäure im Vergleich zu unbehandeltem Apatit bestimmt. Dazu wird über einen bestimmten Zeitraum eine Apatitsuspension auf pH 5 gehalten, indem die in Lösung gehenden Hydroxylionen mit Milchsäure neutralisiert werden und der hierzu erforderliche Verbrauch bestimmt wird.

| | Reduktion der Löslichkeit von Apatit |
|---|---|
| 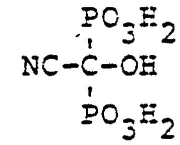 | 65 % |
| 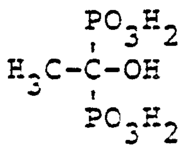 (als Vergleichssubstanz) | 53 % |

## Ansprüche

1. Hydroxyacetonitrildiphosphonsäure und ihre Salze der allgemeinen Formel (III)

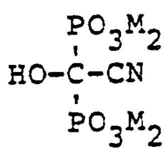

(III)

in der M für H oder ein Kation einer Base steht.

2. Verbindung der allgemeinen Formel (III) nach Anspruch 1, dadurch gekennzeichnet, daß M für ein Kation einer wasserlöslichen Base, insbesondere ein Alkalimetallkation, bevorzugt ein Natriumion, oder ein Ammoniumkation der allgemeinen Formel $R^5R^6R^7R^8N^+$ steht, in der $R^5$, $R^6$, $R^7$ und $R^8$ unabhängig voneinander Wasserstoff oder ein unverzweigter oder verzweigter Alkylrest mit 1 bis 12 C-Atomen sein können.

3. Verfahren zur Herstellung von Hydroxyacetonitrildiphosphonsäure und ihrer Salze der allgemeinen Formel (III)

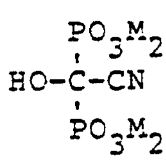

(III)

in der M für H oder ein Kation einer Base steht, dadurch gekennzeichnet, daß man

(a) eine 3-$R^1$-3-Oxo-1-aminopropan-1,1-diphosphonsäure der allgemeinen Formel (IV)

$$R^1 - \underset{\overset{\|}{O}}{C} - CH_2 - \overset{PO_3H_2}{\underset{PO_3H_2}{C}} - NH_2 \qquad (IV)$$

in der $R^1$ für

-eine tertiäre Alkylgruppe der allgemeinen Formel $-(R^2)C(R^3)(R^4)$, wobei $R^2$ und $R^3$ unabhängig voneinander eine $C_1$ bis $C_3$-Alkyl- und $R^4$ eine $C_1$ bis $C_{10}$-Alkylgruppe darstellen,

-eine gegebenenfalls substituierte Cycloalkylgruppe oder

-eine Aryl- oder Heteroarylgruppe, die gegebenenfalls mit Halogen, $C_1$ - $C_5$-Alkoxy, Di-$C_1$ - $C_5$-alkylamino oder $C_1$ - $C_5$-Alkyl substituiert ist, steht, mit Salpetriger Säure, die vorzugsweise in situ aus wäßriger Alkalinitritlösung und verdünnter Mineralsäure hergestellt worden ist, wobei das Molverhältnis Alkalinitrit zu Ausgangsstoff im Bereich von 1 zu 1 bis 6 zu 1 liegt, bei Temperaturen von Raumtemperatur bis 75 °C umsetzt und die Reaktionsmischung in an sich bekannter Weise aufarbeitet,

(b) gegebenenfalls mittels eines sauren Reaktionspartners in an sich bekannter Weise das Reaktionsprodukt der allgemeinen Formel (III), in der M für H steht, erzeugt,

(c) gegebenenfalls das Reaktionsprodukt der allgemeinen Formel (III), in der M für H steht, in an sich bekannter Weise durch Zugabe basischer Reaktionspartner der Formel $M^+OH^-$, worin $M^+$ für ein Alkalimetall-oder Ammoniumkation $R^5R^6R^7R^8N^+$ steht, in dem $R^5$, $R^6$, $R^7$ und $R^8$ unabhängig voneinander Wasserstoff oder ein verzweigter oder unverzweigter Alkylrest mit 1 bis 12 C-Atomen sein können, in Verbindungen der Formel (III), überführt, in der M für ein Alkalimetall- oder Ammoniumkation der genannten Bedeutung steht

(d) und die erhaltenen Verbindungen der Formel (III) nach an sich bekannten Methoden isoliert und reinigt.

4. Verfahren nach Anspruch 3, dadurch gekennzeichnet, daß man als Alkalinitrit Natriumnitrit verwendet.

5. Verfahren nach Ansprüchen 3 und 4, dadurch gekennzeichnet, daß man die Reaktion im Temperaturbereich von 40 bis 60 °C, bevorzugt 45 bis 55 °C, durchführt.

6. Verfahren nach Ansprüchen 3 bis 5, dadruch gekennzeichnet, daß das Molverhältnis Alkalinitrit zu Ausgangsstoff im Bereich von 3 : 1 bis 5 : 1 liegt.

7. Verfahren nach Ansprüchen 3 bis 6, dadurch gekennzeichnet, daß man als sauren Reaktionspartner eine Mineralsäure, eine organische Säure oder ein saures Ionenaustauscherharz verwendet.

8. Verfahren nach Anspruch 7, dadurch gekennzeichnet, daß man als sauren Reaktionspartner ein stark saures Ionenaustauscherharz verwendet.

9. Verfahren nach Ansprüchen 3 bis 8, dadurch gekennzeichnet, daß man als basischen Reaktionspartner $M^+OH^-$ NaOH verwendet.

10. Verwendung der Verbindungen der allgemeinen Formel (III) nach Ansprüchen 1 bis 2 als Komplexierungsmittel und Thresholder.